**Europäisches Patentamt**

**European Patent Office**

**Office européen des brevets**

(11) Publication number: **0 063 893**
**B1**

(12) **EUROPEAN PATENT SPECIFICATION**

(45) Date of publication of patent specification: **29.06.88**

(21) Application number: **82301903.9**

(22) Date of filing: **13.04.82**

(51) Int. Cl.⁴: **G 07 F 15/00, G 07 F 7/00**

(54) **Energy controller.**

(30) Priority: **21.04.81 GB 8112257**
**11.07.81 GB 8121452**

(43) Date of publication of application:
**03.11.82 Bulletin 82/44**

(45) Publication of the grant of the patent:
**29.06.88 Bulletin 88/26**

(84) Designated Contracting States:
**AT BE CH DE FR GB IT LI LU NL SE**

(56) References cited:
**EP-A-0 015 120**
**CH-A- 622 636**
**GB-A-1 166 085**
**GB-A-1 204 111**
**GB-A-1 292 024**
**US-A-3 778 637**

(73) Proprietor: **MAINMET LIMITED**
**High Mill, Mill Street Cullingworth**
**Bradford West Yorkshire, BD13 5HA (GB)**

(72) Inventor: **Robinson, James Alexander Leeman**
**127 Groomsport Road**
**Bangor Northern Ireland (GB)**
Inventor: **McFadden, Maurice H.**
**121, Greystown Avenue Malone Road**
**Belfast Northern Ireland (GB)**

(74) Representative: **Wharton, Peter Robert et al**
**P.R. WHARTON & CO. 11th Floor Tower House**
**Merrion Way**
**Leeds LS2 8PB West Yorkshire (GB)**

Courier Press, Leamington Spa, England.

## Description

This invention relates to energy controllers, and especially controllers which enable a consumer with premises connected to hot water heating, electricity or gas supply systems, or the like, to purchase energy on a prepayment basis.

A particular need exists for apparatus of this type in communal heating schemes. At present it is usual for consumers on such systems to pay fifty-two equal weekly budget payments which are reconciled annually, when rebates are paid out and surcharges collected. The ammounts of these money adjustments are determined by the annual energy consumption measured by rudimentary heat monitors installed in each household. Since heat usage is not immediately related to payment there is much wastage and consumers are often faced with a surcharge at the end of the year which they cannot pay. There is an increasing demand from both suppliers and consumers in such heating schemes for prepayment metering systems to prevent the consumer from using energy beyond his financial means and to give security of payment to the supply authority.

With domestic gas and electricity supplies, coin-in-the-slot prepayment meters are available but these have a number of disadvantages. Firstly, each coin buys a relatively small amount of energy and numbers of coins have to be kept. Secondly, such meters are often broken into either by an intruder or the consumer himself, with consequent loss of revenue and cost of repair to the supply Authority. Furthermore, an official must visit the meters regularly and empty them.

UK—A—1204111 discloses an electricity meter in which the prepayment function is divorced from the measurement function, and the former is capable of accepting coins or tokens. The prepayment unit serves to operate a contactor unit on the electricity supply when the value of the coin or token has been used. An override control is described which may allow the meter to deliver a further set amount of electricity in the absence of a token. The prepayment units contemplated in this document are primarily coin operated and, while the possibility of token operation is mentioned, no indication is given of how such operation could be put into practice.

CH—A—622636 shows a control means capable of receiving pre-programmed cards having encoded in machine-readable form the quantity of energy which is to be allowed to pass before shut-off means are actuated. The control means receives an output signal from a meter and can thus determine the quantity of energy passing through the apparatus. This operates a cancelling device which cancels units of sale according to the energy consumed. When all units of sale on the card have been cancelled a circuit breaker opens. The disclosure contemplates a locking arrangement for preventing the card being stolen while the energy is being consumed. The necessity to leave the card in place during use is inconvenient.

EP—A1—15120 discloses the use of a data processor connected to sensed voltage and current and also, by means of a data-link, with the utility. The processor may be provided with prepayment facilities and may be connected to a shut-off switch. This is a comprehensive but relatively expensive device, especially when using a modem or data-link.

The invention seeks to provide a prepayment energy controller or meter which overcomes or reduces the above-mentioned disadvantages.

According to the present invention there is provided energy control apparatus, in operation connected between an energy source and an energy user, which comprises meter means (E, 20) for measuring energy passing through the apparatus and producing a machine-readable output signal proportional to the energy usage, shut-off means (C, 24) for interrupting the energy flow, and control means (H, 22) for actuating the shut-off means when a predetermined quantity of energy has passed through the apparatus the control means capable of receiving preprogrammed cards, tokens, discs or the like having encoded thereon in machine-readable form the quantity of energy which to be allowed to pass before the shut-off means (C, 24) is actuated, the control means receiving the output signal from the meter means (E, 20) in order to determine the quantity of energy passing through the apparatus characterised in that the control means comprises an up/down counter (11, 14) having two inputs, one of which receives count-up signals from a pulse generator (6, 7, 8) actuated by insertion of a card, token or disc and the other input of which receives count-down signals from the meter means (E, 20), the shut-off means (C, 24) being actuated when the net content of the up/down counter (11, 14) is zero and the pulse generator (6, 7, 8) being connected to the up/down counter (11, 14) to the up/down counter (11, 14) count up by a number of pulses produced by the pulse generator (6, 7, 8) and to decade counters (9, 10) whereby a sngle output signal from the decade counters serves to deactivate the pulse generator (6, 7, 8) once a programmed number of pulses has been produced.

The control means is capable of receiving pre-programmed cards, tokens or the like having encoded thereon in machine-readable form, the quantity of energy which is to be allowed to pass before the shut-off means is actuated. The control means receives the output signal from the meter means and can thus determine the quantity of energy passing through the apparatus. The pre-programmed cards, tokens or the like (hereafter referred to as 'cards' for convenience) can be purchased from the supply Authority, and will advantageously represent a reasonable quantity of energy, e.g. 10, 50 or 100 kilowatt-hours, to prevent the need for frequent programming of the control means while not costing the consumer too great an amount at one time. Insertion of the card causes actuation of the pulse generator which continues to produce pulses up to its programmed limit irrespective of withdrawal of the card. The device is relatively simple and hence inexpensive, and would not add greatly to a utilities costs.

The apparatus of this invention measures out energy to the consumer in exchange for payment. In a preferred form of the invention special coded cards purchased from the supplier are used. When each card is inserted in a slot in the control means the number of energy units bought is registered and the coding on the card is erased thereby rendering it valueless for any further transactions. As energy is consumed the number of registered units is reduced appropriately until eventually when no further units remain the supply of energy is terminated.

The main components of a consumer's installation are a meter, a prepayment energy controller and an energy supply shut-off or interrupter. This arrangement may be readily adapted to any energy supply system by using the prepayment energy controller in conjunction with a relevant meter and interrupter. For example, an electrical supply would use the well known type of kilowatt-hour meter and the interrupter would be an electrical contactor. Gas supplies would use a flow meter for measurement and a solenoid valve as the interrupter. It is preferable for the meter in all applications to be of a type which emits electrical pulses representing energy used. In the special case of the communal hot water heating system installation the meter may be a device specifically designed for such systems, for example the device known as the Clorius Farameter. The latter contains means for calculating energy usage from measurements of water flow rate and temperature difference between the incoming and outgoing water in the pipes connected to the consumer's premises. A pulse may be emitted for each tenth of a kilowatt-hour. The interrupter may then be an electrically operated motorised valve.

The card reader in a preferred form of the invention accepts cards containing a strip of magnetic tape which is precoded with a unique arrangement of magnetised and demagnetised sections. A decoder in the card reader responds only to this code and causes the counter register to advance by the number of units purchased. Forgery of the cards is extremely difficult because of the difficulty in detecting the magnetic imprint and thereafter making tokens acceptable to the card reader without very elaborate equipment.

If desired, the apparatus may incorporate a time clock to enable the consumer to time the supply of energy. This is particularly useful in relation to communal hot water heating systems. Also, if desired the meter and control means may be incorporated into one unit as may the shut-off means. Ideally the control means continually registers the amount of energy purchased by the card and still remaining unused, so that the consumer can see at a glance how much prepaid energy is still to come before a fresh card is needed.

The cards used with the apparatus of the invention are intrinsically of little or no value, and are less likely to be stolen than money; the apparatus itself contains no money at any time; and the need for emptying disappears. Furthermore, the supply Authority is sure of payment and, moreover, has the cash-flow advantages of payment in advance.

The invention will be described further, by way of example, with reference to the accompanying drawings, in which:

Figure 1 is a diagram of hot water heating supply pipes to a consumer's premises with an apparatus according to the invention;

Figure 2 is a diagram of a suitable control unit;

Figure 3 is a diagram of an apparatus suitable for use with a gas or electricity supply; and

Figure 4 is a circuit diagram of the control means of Figure 3.

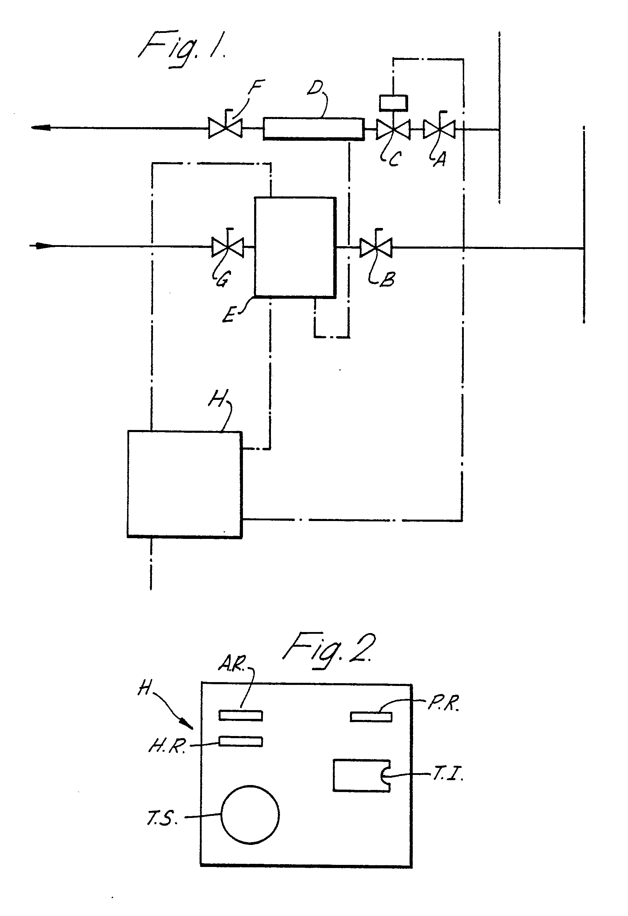

Referring to the drawings there is shown in Figures 1 and 2 a consumer's heating supply system connected to a communal heating supply system via isolating valves A and B, an energy interrupter in the form of a flow water temperature sensor D, main flow meter E (fitted on the return and including a return water temperature sensor), further isolating valves F and G and prepayment control and display unit H.

Referring more particularly to Figure 2 a prepayment control and display unit H, connected to an electrical mains supply and transformed down to a low voltage for safety in operation, contains an accumulated heat consumed register AR, an hours run register HR, a prepaid heat register PR, card reader slot T1, and time switch TS.

In use, the apparatus is installed and power supply switched on. The time switch TS may be programmed to allow the heating to be available for periods as required by the consumer.

The insertion of a token advances tha prepaid heat register PR (for example 100 KW-hr) and triggers a switch allowing an electrical supply from the time switch TS, when it is in an 'on' cycle, to actuate the motorised valve C to open and allow the flow of water to the consumer.

As heat is used by the consumer it is measured by the heat meter through the flow water temperature sensor D and main flow meter E and signalled to the prepayment control and display unit H, advancing the accumulative heat register AR and reversing the prepaid heat register PR towards zero. When the consumer has used up the prepaid quantity of heat, e.g. 100 KW-hours, the prepaid heat register PR on reaching zero triggers a switch and interrupts the electrical supply from the time switch TS to the motorised valve C, closing it and stopping the flow of water to the consumer system.

It should be appreciated that a number of tokens can be inserted into the slot, for example in 100 KW-hours units up to a total of, say, 1000 KW-hours of prepayment.

Furthermore, the use of a programmable time switch allows a number of on/off cycles to be set to suit a consumer's needs.

Motorised valves suitable for use as the on/off hot water flow control valve of the invention are commercially available as are the card reader units.

For example, the Clorius Farameter heat meter is suitable for the heat measurement unit. Programmable time switches commonly available are suitable for use in connection with the invention.

In a particular example an average dwelling house using heat 16 hours per day would consume approximately 26,000 KW-hour (900 therms) in a year to give accepted comfort conditions. However, due to consumers on communal schemes having heat available 24 hours per day on a credit basis, many are consuming at least 25% more than they require and find themselves in a surcharge situation at the end of the year. Authorities in these cases are trying to recover surcharges which consumers cannot afford to pay and the authorities are faced with major debt recovery problems. On installing an apparatus according to this invention consumers could only purchase the heat they can afford to pay for, thus heat consumption is no longer wasteful and authorities have no debt recovery problems.

Thus if taken on a national scale a major reduction of the public debt would be achieved.

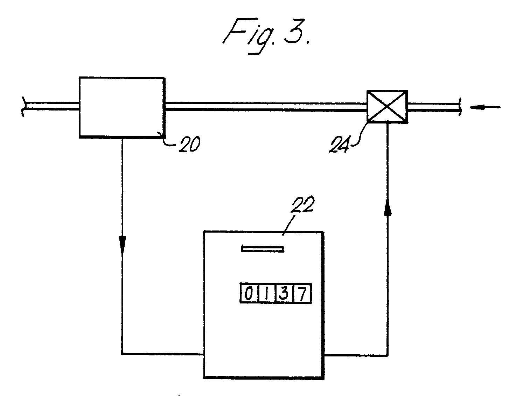

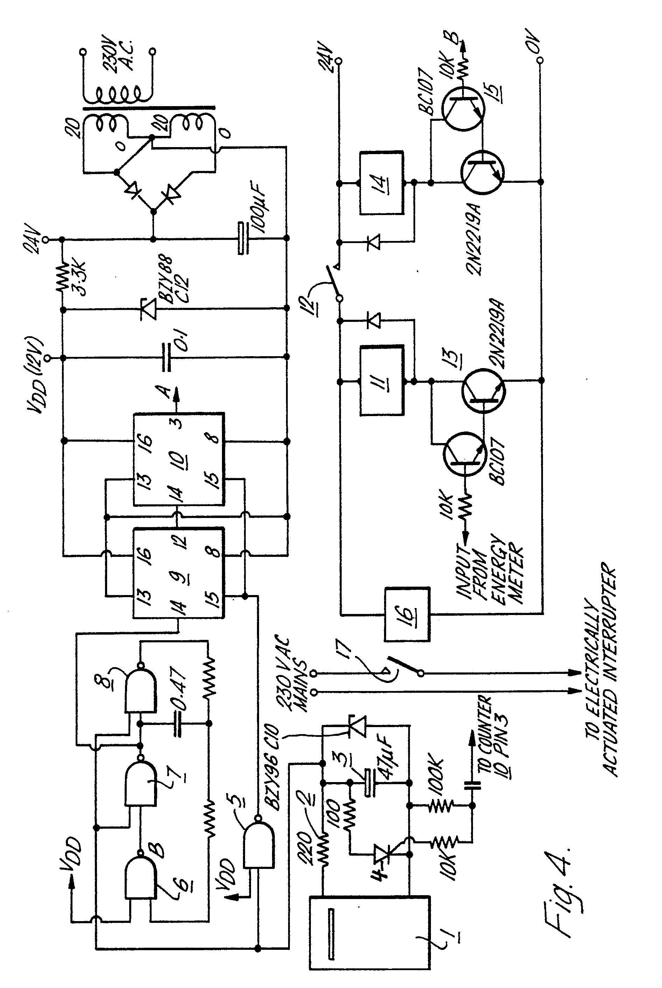

Referring now to Figures 3 and 4, there is shown an apparatus according to the invention suitable for use with gas or electricity supplies comprising meter means 20, control means 22 and shut-off means 24. With a gas supply the meter 20 would be a flow meter adapted to produce an electrical signal for the controller 22 proportional to the volume (and energy content) of gas passing therethrough. In this case the shut-off means 24 would be a motorised valve.

In the case of an electricity supply, the controller 22 is a bi-directional electromechanical counter which has four decades and displays to the consumer the number of energy units (kilowatt-hours) available for consumption. This counter has two electromagnetic drive units 11, 14. A pulse of current in one of these drive units 14 causes the displayed units to increase by one and a current pulse in the other drive unit 11 causes the displayed units to decrease by one. The relatively high currents required by the drive units are obtained from transistoramplifiers 13 and 15. The counter also contains a pair of electrical contacts 12 which open when the counter displays zero (i.e. 0000).

A card reader 1 accepts cards containing a strip of magnetic tape which is precoded with a unique arrangement of magnetised and demagnetised sections. A decoder in the card reader responds only to this code. Card readers of this type are readily obtainable and are used, for example, in security door locks, cash dispensers in banks and ticket operated turnstyles. When a card is inserted a potential of 12 volts is applied for a short duration (typically 50 milliseconds) to charge capacitor 3 through resistor 2. The integrated circuit NAND gates 6, 7 and 8 with the associated resistors and capacitor form a pulse generator which is normally inoperative but is switched on as long as the capacitor 3 is charged. The switching function is performed by the connection from capacitor 3 to the inputs of NAND gates 7 and 8. The output of the pulse generator is connected to an electronic counter comprising two integrated circuit decade counters 9 and 10 so that when a continuous train of pulses is generated a single pulse appears at the output terminal A of counter 10 coincident with the hundredth pulse from the pulse generator. A silicon controlled rectifier (SCR) 4, which is normally in a non-conducting state, is connected in parallel with capacitor 3 and has its control gate connected to terminal A. The pulse at A switches the SCR 4 to its conducting state and quickly discharges the capacitor. The pulse generator is thereby made inoperative again and no further pulses are produced. The electronic counter is simultaneously reset to zero by the action of NAND gate 5 which is also connected to capacitor 3.

The overall effect is that the insertion of an appropriately coded card into the card reader causes the pulse generator to produce exactly one hundred pulses. These pulses are applied to the electromechanical counter by a connection from terminal B of NAND gate 6 to the input of transistor amplifier 15. The displayed count thereby increases by one hundred. The other transistor amplifier 13 accepts pulses from the energy meter 20 and causes the displayed pulse count to decrease by one count for each tenth of a kilowatt-hour consumed. When all purchased units, in this case 10 KW-hour, are consumed the display reads zero and the contacts 12 open. This removes the 24 volts supply from relay 16 the contacts 17 of which open and the supply of energy is terminated by the interrupter 24. Naturally the apparatus of Figures 3 and 4 is suitable for use with command heating supply systems and indeed all forms of energy.

Modern electronic devices provide alternative means of implementing the prepayment energy controller. For example a microprocessor system offers advantages in flexibility and provides a computing facility to enable easy programming of card value and tariff variations. Also, it is possible to programme the system to enable previous debts to be recovered. Thus, a 100 KW card or token could be programmed to deliver only, say, 70 KW-hours thus recovering the value of the 30 KW-hours unused. A further facility provides for emergency supplies. A switch or button may be provided on the controller which, when activated, will allow a further 50 KW-hours (or other convenient amount) of energy to be delivered, without insertion of a card or token, for use should the previous token expire at an inconvenient or dangerous time. The amount of this energy supply may be automatically deducted from the next purchased card or token used with the controller which would also reset the emergency supply circuit.

## Claims

1. Energy control apparatus, in operation connected between an energy source and an energy user, which comprises meter means (E, 20) for measuring energy passing through the apparatus and producing a machine-readable output signal proportional to the energy usage, shut-off means (C, 24) for interrupting the energy flow, and control means (H, 22) for actuating the shut-off means when a predetermined quantity of energy has passed through the apparatus, the control means being capable of receiving preprogrammed cards, tokens, discs or the like having encoded thereon in machine-readable form the quantity of energy which is to be allowed to pass before the shut-off means (C, 24) is actuated, the control means receiving the output signal from the meter means (E, 20) in order to determine the quantity of energy passing through the apparatus, characterised in that the control means (H, 22) comprises an up/down counter (11, 14) having to inputs, one of which receives count-up signals from a pulse generator (6, 7, 8) actuated by insertion of a card, token or disc and the other input of which receives count-down signals from the meter means (E, 20), the shut-off means (C, 24) being actuated when the net content of the up/down counter (11, 14) is zero, and the pulse generator (6, 7, 8) being connected to the up/down counter (11, 14) to cause the up/down counter (11, 14) to count up by a number of pulses produced by the generator (6, 7, 8) and connected to decade counters (9, 10) whereby a single output signal from the decade counters serves to deactivate the pulse generator (6, 7, 8) once a programmed number of pulses has been produced.

2. Apparatus as claimed in claim 1 in which the card contains a strip of magnetic tape which is precoded with a unique arrangement of magnetised and demagnetised sections.

3. An apparatus according to either of claims 1 to 2 in which the control means incorporates a display capable of displaying the quantity of energy purchased by means of the card remaining unused at any given time.

4. An apparatus according to any of claims 1 to 3 adapted for use with an electricity supply system, in which the meter means comprises a watt-hour meter (20) and the shut-off means comprises an electrically actuated switch (24).

5. An apparatus as claimed in any one of claims 1 to 3 adapted for use with a gas supply in which the meter means comprises a gas flow means (20) having an electrical output signal proportional to the volume and energy content of the gas flowing therethrough, and the shut-off means comprises an electrically actuated solenoid valve (24).

6. An apparatus according to any one of claims 1 to 3 adapted for use with a communal hot water heating system, in which the meter means comprises a meter (D) capable of measuring water flow and temperature difference between the incoming and outgoing water and thereby calculating the energy usage, and the shut-off means comprises a motorised valve (C).

7. An apparatus according to any one of claims 1 to 6 in which the control means is provided with an override switch enabling a predetermined quantity of energy to be supplied without the insertion of a card or token in the event of an emergency.

8. An apparatus as claimed in claim 7 in which the control means contains a microprocessor which can be programmed to recover the cost of energy supplied but not already paid for.

## Patentansprüche

1. Energiesteuerungsvorrichtung, die im Betrieb zwischen eine Energiequelle und einen Energieverbraucher geschaltet ist und die folgendes aufweist: Eine Meßeinrichtung (E, 20) zum Messen von Energie, die Durch die Vorrichtung fließt, und die ein maschinenlesbares Ausgangssignal proportional zum Energieverbrauch erzeugt, eine Absperreinrichtung (C, 24) zur Unterbrechung des Energieflusses, und eine Steuerungseinrichtung (H, 22) zur Betätigung der Absperreinrichtung, wenn eine vorgegebene Energiemenge durch die Vorrichtung geflossen ist, wobei die Steuerungseinrichtung in der Lage ist, vorher programmierte Karten, Wertmarken, Scheiben oder dergleichen aufzunehmen, in die in maschinenlesbarer Form die Energiemenge einkodiert ist, welche hindurchströmen darf, bevor die Absperreinrichtung (C, 24) betätigt wird, wobei die Steuerungseinrichtung das Ausgangssignal von der Meßeinrichtung (E, 20) erhält, um die durch die Vorrichtung fließende Energiemenge zu bestimmen, dadurch gekennzeichnet, daß die Steuerungseinrichtung (H, 22) einen Vorwärts/Rückwärts-Zähler (11, 14) mit zwei Eingängen aufweist, von denen einer Vorwärtszählsignale von einem Impulsgenerator (6, 7, 8) erhält, der durch Einsetzen einer Karte, Wertmarke oder Scheibe betätigt wird, und von denen der andere Eingang Rückwärtszählsignale von der Meßeinrichtung (E, 20) erhält, wobei die Absperreinrichtung (C, 24) betätigt wird, wenn der Nettoinhalt des Vorwärts/Rückwärts-Zählers (11, 14) Null ist, und wobei der Impulsgenerator (6, 7, 8) an den Vorwärts/Rückwärts-Zähler (11, 14) angeschlossen ist, um den Vorwärts/Rückwärts-Zähler (11, 14) um eine vorgegebene Anzahl von Impulsen vorwärtszählen zu lassen, die von dem Impulsgenerator (6, 7, 8) erzeugt werden, und an Dekadenzähler (9, 10) angeschlossen ist, so daß ein einziges Ausgangssignal von den Dekadenzählern dazu dient, den Impulsgenerator (6, 7, 8) zu entaktivieren, sobald eine programmierte Anzahl von Impulsen erzeugt worden ist.

2. Vorrichtung nach Anspruch 1, bei der die Karte einen Magnetbandstreifen enthält, der vorher mit einer speziellen Anordnung von magnetisierten und entmagnetisierten Bereichen kodiert ist.

3. Vorrichtung nach Anspruch 1 oder 2, wobei die Steuerungseinrichtung eine Anzeige enthält, die in der Lage ist, von der mit der Karte gekauften Energie die Menge anzuzeigen, die zu jedem beliebigen Zeitpunkt nocht nicht verbraucht ist.

4. Vorrichtung nach einem der Ansprüche 1 bis 3, ausgelegt zur Verwendung bei einem Elektrizitätsversorgungssystem, wobei die Meßeinrichtung einen Wattstundenzähler (20) und die Absperreinrichtung einen elektrisch betätigten Schalter (24) aufweisen.

5. Vorrichtung nach einem der Ansprüche 1 bis 3, ausgelegt zur Verwendung bei einer Gasversorgung, wobei die Meßeinrichtung einen Gasstromzähler (20) aufweist, der ein elektrisches Ausgangssignal proportional zum Volumen und Energieinhalt des hindurchströmenden Gases liefert, und wobei die Absperreinrichtung ein elektrisch betätigtes Magnetventil (24) aufweist.

6. Vorrichtung nach einem der Ansprüche 1 bis 3, ausgelegt zur Verwendung bei einem kommunalen Heiwasser-Heizsystem wobei die Meßeinrichtung ein Meßgerät (D) aufweist, das in der Lage ist, den Wasserdurchsatz und die Temperaturdifferenz zwischen dem hineinfließenden und hinausfließenden Wasser zu messen und dadurch den Energieverbrauch zu berechnen, und wobei die Absperreinrichtung ein motorisiertes Ventil (C) aufweist.

7. Vorrichtung nach einem der Ansprüche 1 bis 6, wobei die Steuerungseinrichtung mit einem Übersteuerungsschalter versehen ist, der es ermöglicht, daß eine vorgegebene Energiemenge im Bedarfsfall ohne das Einstecken einer Karte oder Wertmarke geliefert wird.

8. Vorrichtung nach Anspruch 7, wobei die Steuerungseinrichtung einen Mikroprozessor enthält, der programmierbar ist, um die gelieferten, aber noch nicht gezahlten Energiekosten einzuziehen.

**Revendications**

1. Appareil de contrôle d'énergie, connecté en fonctionnement entre une source d'énergie et un utilisateur d'énergie, comprenant des moyens de comptage (E, 20) pour mesurer l'énergie passant à travers l'appareil et produisant un signal de sortie en code machine proportionnel à l'énergie utilisée, des moyens d'arrêt (C, 24) pour interrompre la circulation d'énergie, et des moyens de contrôle (H, 22) pour actionner les moyens d'arrêt quand une quantité prédéterminée d'énergie a traversé l'appareil, les moyens de contrôle étant capables de recevoir des cartes préprogrammées, des jetons, des disques ou d'autres éléments sur lesquels sont codés, en forme de code machine, la quantité d'énergie autorisée à passer avant que les moyens de coupure (C, 24) ne soient actionnés, les moyens de contrôle recevant le signal de sortie des moyens de comptage (E, 20) pour déterminer la quantité d'énergie traversant l'appareil, caractérisé en ce que les moyens de contrôle (H, 22) comprennent un compteur bidirectionnel (11, 14) ayant deux entrées dont l'une reçoit des signaux progressifs d'un générateur d'impulsions (6, 7, 8) actionné par l'insertion d'une carte, d'un jeton ou d'un disque, l'autre entrée recevant des signaux régressifs par les moyens de comptage (E, 20), les moyens de coupure (C, 24) étant actionnés quand le contenu net du compteur bidirectionnel (11, 14) est zéro, et le générateur d'impulsions (6, 7, 8) étant connecté au compteur bidirectionnel (11, 14) pour provoquer le fonctionnement progressif du compteur bidirectionnel (11, 14) par un nombre d'impulsions produites par le générateur d'impulsions (6, 7, 8), et connecté également aux compteurs à décade (9, 10), de sorte qu'un seul signal de sortie des compteurs à décade sert à désactiver le générateur d'impulsions (6, 7, 8) une fois qu'un nombre programmé d'impulsions a été produit.

2. Appareil selon la revendication 1, dans lequel la carte contient une bande de ruban qui est précodée selon un arrangement unique de sections magnétisées et démagnétisées.

3. Appareil selon l'une ou l'autre des revendications 1 ou 2 dans lequel des moyens de contrôle comprennent un affichage capable d'afficher la quantité d'énergie achetée au moyen de la carte restant inutilisée à tout moment donné.

4. Appareil selon l'une des revendications 1 à 3, adapté pour une utilisation avec un système d'alimentation électrique, dans lequel les moyens de comptage comprennent un compteur wattheuremètre (20) et les moyens de coupure comprennent un interrupteur (24) actionné électriquement.

5. Appareil revendiqué selon l'une des revendications 1 à 3, adapté à l'emploi d'une alimentation de gaz, dans lequel les moyens de comptage comprennent un moyen de débit de gaz (20) délivrant un signal de sortie électrique proportionnel au volume et au contenu d'énergie du gaz qui le traverse, et les moyens de coupure comprennent une valve électromagnétique commandée électriquement.

6. Appareil selon l'une quelconque des revendications 1 à 3 adapté pour son emploi avec un système communautaire de chauffage d'eau chaude, dans lequel les moyens de comptage comprennent un compteur (D) capable de mesurer le débit de l'eau et la différence de température entre l'eau entrante et sortante et de calculer de ce fait l'utilisation de l'énergie, et les moyens de coupure comprennent une valve motorisée (C).

7. Appareil selon l'une des revendications 1 à 6, dans lequel les moyens de contrôle sont munis d'un interrupteur de commande permettant qu'une quantité prédéterminée d'énergie soit fournie sans l'insertion d'une carte ou d'un jeton dans l'éventualité d'une urgence.

8. Appareil selon la revendication 7, dans lequel les moyens de contrôle contiennent un microprocesseur qui peut être programmé pour récupérer le prix de l'énergie fournie mais non déjà payée.

*Fig. 1.*

*Fig. 2.*

Fig. 3.

20

24

22

| 0 | 1 | 3 | 7 |

Fig. 4.